# EUROPEAN PATENT APPLICATION

(11) **EP 3 168 532 A1**
(43) Date of publication of application: **17.05.2017**
(21) Application number: 15818351.7
(22) Date of filing: 06.07.2015
(51) Int. Cl.: F21V 33/00, H04N 5/225

(54) **CAMERA-INTEGRATED LED LIGHTING DEVICE**

(30) Priority: 08.07.2014 KR 20140085324
(71) Applicant: KMW Inc., Gyeonggi-do 445-813 (KR)
(72) Inventor: CHAE, Jang Byung, Gunpo-si Gyeonggi-do 435-760 (KR); LEE, Chan Woo, Anyang-si Gyeonggi-do 431-733 (KR); KIM, Geun Young, Suwon-si Gyeonggi-do 440-729 (KR); SON, Byung Jin, Suwon-si Gyeonggi-do 443-800 (KR); KIM, Eun Joong, Seoul 150-759 (KR); LEE, Hyun Woo, Seoul 134-771 (KR)
(74) Representative: RatnerPrestia
(86) International application number: PCT/KR2015/006925
(87) International publication number: WO 2016/006887

(57) **Abstract**

The present invention relates to a camera-integrated LED lighting device including a body having an open upper surface and providing an accommodation space therein, the body having a bottom surface formed with a rear portion of the bottom surface arranged lower than a front portion of the bottom surface, a power supply, a communication control unit, and an antenna unit accommodated in the body, a plurality of lighting units coupled to the front portion of the bottom surface of the body, a camera unit coupled to the rear portion of the bottom surface of the body, a cover part openably hinge-coupled to the upper surface of the body at one end thereof and having an antenna cover part formed with a part of the cover part protruding upward to accommodate the antenna unit in a protruded state, and a speaker unit coupled to the bottom surface of the body.

## Description

### [Technical Field]

The present disclosure relates to a camera-integrated LED (light emitting diode) lighting device. More particularly, the present disclosure relates to a camera-integrated LED lighting device which is capable of arbitrarily adjusting the angle between a lighting unit and a camera and having a reduced size due to its easy integrability.

### [Background]

In general, LEDs have a longer life span and lower power consumption than conventional non-LED lights. Recent years have seen the development of LED lighting products capable of replacing conventional lights such as street lamps and interior lights.

Additional functionality has been attempted to LED lights such as functions of communication relay, determination of the traffic situation, security, etc., beyond the simple lighting function. However, in order to relay communications, an antenna has to protrude to the outside of the lighting device since metal heat dissipation fins for dissipating heat generated from the metal panel or LEDs constituting the lighting device make it difficult to transmit communication signals. For example, Korean Patent No. 10-0851233 discloses that an antenna for receiving an RF signal protrudes to the outside.

The antenna protruding outward may be easily damaged, and be easily contaminated to degrade the performance of the LED lights.

In addition, the Korean Ministry of Environment recently enforced the Law on the Prevention of Light Pollution by Artificial Lighting from February 1, 2013. The regulations are mainly about protecting the public health from abuse of artificial lighting, to prevent artificial lighting from affecting the ecosystem, and to manage the excess light and intrusive light by establishing a light emission allowance standard for lighting for buildings, sign boards, and various kinds of infrastructure.

To prevent intrusion of light such as urban infrastructure lighting, building lighting, and electric sign board into the nearby buildings at night, street lamps or other lights on the road must observe the light emission allowance standard, and it is necessary to adjust the direction of light distribution, which is the direction of light emission.

Improvements to the light distribution of the conventional lights using LEDs were suggested in relation to a structure for widening light distribution of the lighting module as disclosed in Korean Patent Application Publication No. 10-2011-0108269 or to a method for controlling the light distribution using a lens as disclosed in Korean Patent No. 10-0961676.

However, in the structures for increasing the light distribution of the lighting module, the penetrating light increases in proportion to the light distribution area, increasing the light pollution. The method of using lens for controlling the light distribution involves such a lens that may reduce the light efficiency, and inconvenient replacement to a proper lens when necessary and an appropriate lens fabrication required for each light specification.

Korean Patent No. 10-1083606 discloses an LED lighting device with a camera, wherein a camera module is installed on the inner side of an LED module. However, this method causes the LED light emissions to hinder capturing and recognizing images of the target area to be actually imaged. That light emitted from the LED is directly incident on the camera rather than the LED light reflected at the target area being desirably incident on the camera.

In conventional LED lighting devices, a power supply member for supplying a constant power is usually installed in a space separate from the lighting unit. This makes it difficult to downsize the LED lighting device and to install and maintain the device.

### [Disclosure]

### [Technical Problem]

Therefore, the present disclosure has been made in an effort to effectively addressing the above issues, and it is an object of the present invention to provide a camera-integrated LED lighting device that is easy to miniaturize and maintain.

In addition, the present invention seeks to provide a camera-integrated LED lighting device that holds an antenna from protruding to the outside and protects itself from external environmental factors.

The present invention further seeks to provide a camera-integrated LED lighting device capable of easily adjusting an angle of a lighting unit to enable arbitrary light distribution and preventing direct light from a lighting unit from being incident on a camera.

### [Summary]

In accordance with some embodiments of the present disclosure, a camera-integrated LED lighting device comprises a body having an open upper surface and providing an accommodation space therein, the body having a bottom surface formed with a rear portion of the bottom surface arranged lower than a front portion of the bottom surface; a power supply, a communication control unit, and an antenna unit accommodated in the body; a plurality of lighting units coupled to the front portion of the bottom surface of the body; a camera unit coupled to the rear portion of the bottom surface of the body; a cover part open ably hinge-coupled to the upper surface of the body at one end thereof and having an antenna cover part formed with a part of the cover part protruding upward to accommodate the antenna unit in a protruded state; and a speaker unit coupled to the bottom surface of the body.

### [Advantageous Effects]

According to the present disclosure as described above, a camera-integrated LED lighting device may be downsized by mounting, on an upper portion of the body thereof, a power supply for supplying a constant power to a lighting unit, a communication controller, and an antenna. In addition, the upper portion of the body is provided with a cover formed of a non-metal material to enable transmission and reception of data through the antenna built in the body, thereby solving the antenna exposure issues.

In addition, the camera-integrated LED lighting device of the present disclosure has the cover further topped with a lager protection against external factors such as rain or dust, thereby improving the reliability of the device.

In addition, each of the lighting units is coupled to a lighting coupling unit of the body so as to control its light distribution which may be arbitrarily adjusted irrespective of the installation position of the lighting device. This prevents the penetration light from penetrating into nearby buildings.

That is, the present disclosure enables an installer to control the light distribution, thereby implementing a controlled illumination by distinguishing an area needing lighting from others requiring no lighting. This prevents the occurrence of light pollution.

In addition to the arbitrary adjustability of the light distribution of each of the lighting units, an installation height difference provided between the lighting units and a camera eliminates the possibility of light from being directly introduced into the camera irrespective of the adjusted distribution angles of the lighting units.

### [Brief Description of the Drawings]

FIG. 1 is a partially exploded perspective view of a camera-integrated LED lighting device according to at least one embodiment of the present disclosure.
FIG. 2 is a bottom perspective view of FIG. 1.
FIG. 3 is a side view of the camera-integrated LED lighting device of FIG. 1 after assembly.
FIG. 4 is a front view of the camera-integrated LED lighting device of FIG. 1 after assembly.
FIG. 5 is a perspective view of the camera-integrated LED lighting device of FIG. 1 after assembly.
FIG. 6 is an exploded perspective view of an example lighting unit applied to at least one embodiment of the present disclosure.
FIG. 7 is a cross-sectional view of the lighting unit of FIG. 6 after assembly.
FIG. 8 is a diagram of a configuration of a first substrate according to at least one embodiment of the present disclosure.
FIG. 9 is a detailed cross-sectional view of a configuration of a rotation part and a tilt unit.
FIG. 10 is a cross-sectional view of a configuration of an optical module unit according to at least one embodiment of the present disclosure.

**REFERENCE NUMERALS**

| | |
|---|---|
| 100: Body | 110: Power supply |
| 120: Communication controller | 130: First antenna unit |
| 140: Second antenna unit | 150: Hinge |
| 160: Locking member | 200: Cover part |
| 210: Antenna cover part | 220: Coupling groove |
| 230: Locking portion | 240: Engaging groove |
| 300: Shield cover | 310: Fastening protrusion |
| 400: Lighting unit | 101: Opening |
| 102: Center electrode | 103: First substrate |
| 104: Spring electrode | 105, 106: Wiring part |
| 241: Packing | 430: Flange |
| 440: Rotation part | 441: First tilt arm |
| 442: Stepped portion | 443: Fastening hole |
| 444: O-ring | 445: First wire connection hole |
| 446: Fastening hole | 447: Bolt |
| 448: First tilting center portion | 450: Coupling |
| 460: Second substrate | 461: Electrode pin |
| 462: Ring-shaped electrode | 470: Tilt unit |
| 471: Second tilt arm | 472: Fastening hole |
| 473: Second tilting center portion | 474: Seating portion |
| 475: Second wire connection hole | 480: Optical module part |
| 481: Bell-shaped cover part | 482: Third substrate |
| 483: LED | 484: Heat dissipation fin |
| 500: Camera unit | 600: Speaker unit |

### [Detailed Description]

Hereinafter, at least one embodiment of the present disclosure will be described in detail with reference to the accompanying drawings.

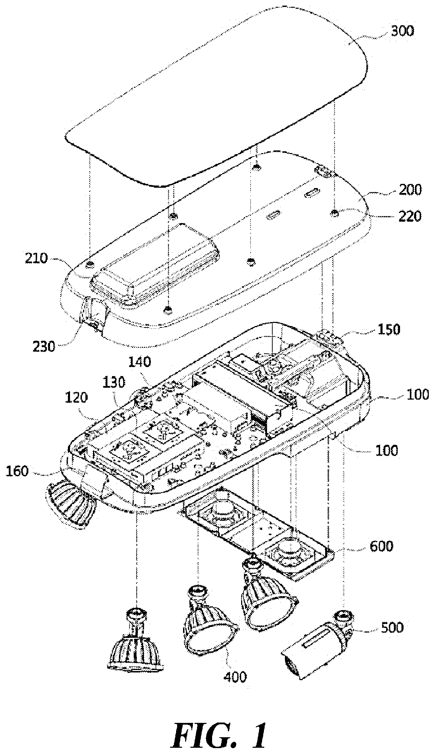

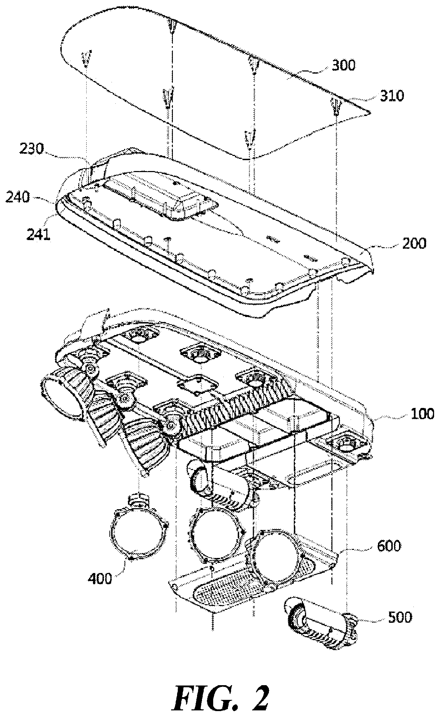

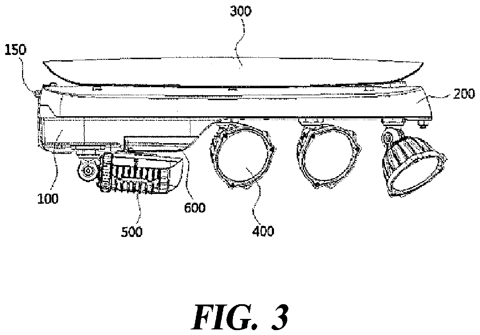

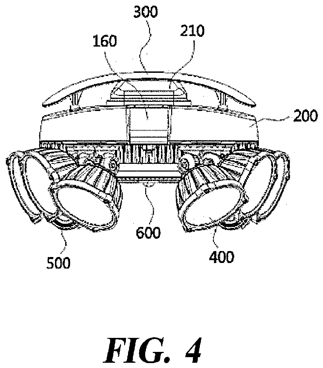

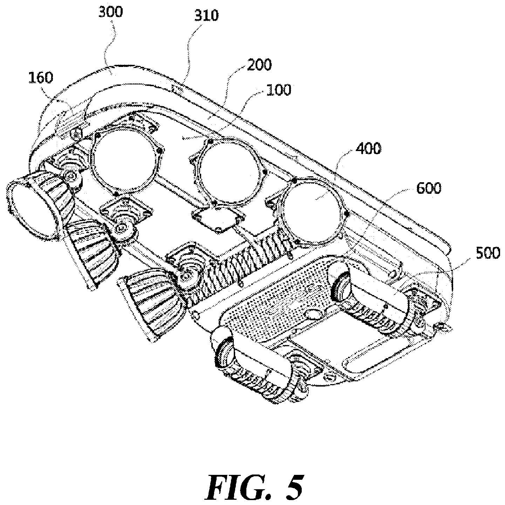

FIG. 1 is a partially exploded perspective view of a camera-integrated LED lighting device according to at least one embodiment of the present disclosure, FIG. 2 is a bottom perspective view of FIG. 1, FIG. 3 is a side view of the assembled components of FIG. 1, FIG. 4 is a front view of the assembled components of FIG. 1, and FIG. 5 is a perspective view of the assembled components of FIG. 1.

Referring to FIGs. 1 to 5, a camera device-integrated LED lighting device according to at least one embodiment of the present disclosure includes the following components:
a body 100 having an open upper surface and providing an accommodation space, a power supply 110 accommodated in the body 100, a communication controller 120, first and second antenna units 130 and 140, a cover part 200 open ably coupled to an upper portion of the body 100 by a hinge 150 and including a locking part 230 to engage and fix a locking member 160 on the front surface of the body 100, an antenna cover 210 for providing an accommodation space protruding upward from a part of the cover part 200 such that the first and second antenna units 130 and 140 are positioned higher than other parts of the cover part 200, a shield cover 300 provided with an insertion protrusion310 inserted into a coupling groove 220 provided on the upper surface of the cover 210 to prevent inflow of water, a speaker unit 600 coupled to a bottom surface of the body 100 to reproduce a voice signal received through the communication controller 120, a plurality of lighting units 400 coupled to a part of the bottom surface of the body 100 and capable of turning and tilting, and a camera unit 500 coupled to the bottom surface of the body 100 at a rear end of the lighting units 400 to capture an image of a surrounding area and transmit the captured image through the communication controller 120.

Hereinafter, the configuration and operation of the camera-integrated LED lighting device according to at least one embodiment of the present disclosure will be described in detail.

The body 100 is formed such that the front and rear portions of the bottom surface thereof have different heights. The plurality of the lighting unit 400 is coupled to the front portion, and the camera unit 500 is coupled to the rear portion. Due to the step of the body 100, the coupling surface of the camera unit 500 is located at a lower position than the coupling surface of the lighting unit 400.

The step of the bottom surface of the body 100 is provided to prevent an image captured by the camera unit 500 from being interfered with by the lighting unit 400. It is appropriate to provide a sufficient distance between the camera unit 500 and the lighting unit 400 in order to prevent the direct light of the lighting unit 400 from being incident on the camera unit 500 provided in the same plane. The present disclosure in some embodiments is capable of preventing direct light of the lighting unit 400 from entering the camera unit 500 since the installation surface of the camera unit 500 has a different height from the installation surface of the lighting unit 400, resulting in improved integrability.

The body 100 has an open top surface and a plurality of coupling holes is provided on the bottom surface thereof such that the brackets of the lighting unit 400 and the camera unit 500 may be fastened thereto.

The power supply 110, the first and second antenna units 130 and 140, and the communication controller 120 are mounted on the inside of the body 100. In addition, various required components may be integrally accommodated. The first and second antenna units 130 and 140 and the communication controller 120 are positioned appropriately in the front portion and the power supply 110 is disposed in the rear portion.

This helps toward proper operation of the first and second antenna units 130 and 140, while separating thepower supply110, which is a heat source, from the lighting unit 400.

The cover part 200 is coupled to the upper surface of the body 100 by the hinge 150 such that the cover part 200 may be opened and closed. This facilitates opening and closing the cover part 200, and thus maintenance thereof.

The locking part 230 is provided on the front side of the cover part 200 such that the locking part 160 provided on the front side of the body 100 may be latched thereto.

The upper surface edge of the body 100 is inserted into the coupling groove 240 provided inside the bottom surface of the cover part 200 and is tightly coupled. The packing 241 is provided in the coupling groove 240, to prevent inflow of foreign matter, in particular, moisture.

The antenna cover part 210 provided on the cover part 200 protrudes upward over the other surfaces of the cover part 200 and provides a space therein to receive the first and second antenna parts 130 and 140.

The body 100 may be formed of metal in order to maintain rigidity. The cover part 200 may be made of a resin material such that communication signals may be transmitted and received uninterrupted. However, in order to more completely process communication signals, the first and second antenna units 130 and 140 need to be positioned higher than the other components such as the power supply 110, and the antenna cover part 210 is provided to the cover part 200 in order to protect the first and second antenna units 130 and 140.

A plurality of coupling grooves 220 are formed on the upper surface of the cover part 200. The bottom surface of the shield cover 300 coupled to the upper portion of the cover part 200 is provided with a fastening protrusion 310 protruding by a predetermined length at a position corresponding to the position of the coupling groove 220. The fastening protrusion 310 may be fixed at a predetermined distance from the cover part 200.

The shield cover part 300 prevents moisture from flowing through the cover part 200 during a rainy day. To this end, the shape of the shield cover part 300 is formed to be a gentle curved surface, such that foreign matter such as dust may not easily accumulate, and that rainwater naturally serves to wash collected foreign matters away.

The angle of each of the lighting units 400 located in front of the bottom surface of the body 100 is adjustable, whereby adjusting the light distribution of each of the lighting units 400. Accordingly, the light of the lighting units 400 is prevented from being emitted onto the inside of nearby buildings, eliminating concern for light pollution.

Hereinafter, the specific configuration and operation of the light distribution control of the lighting unit 400 will be described.

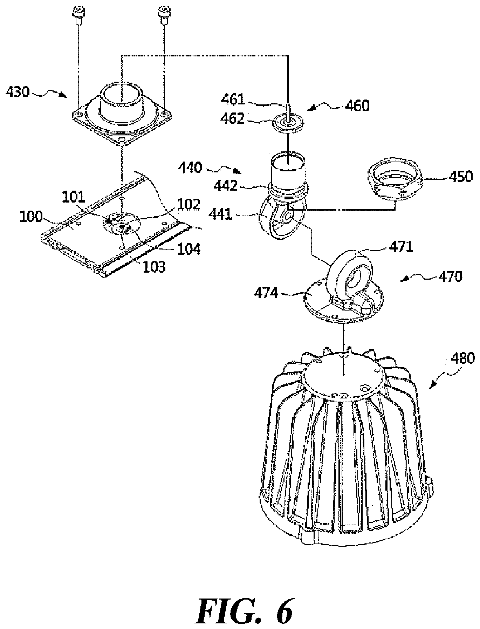

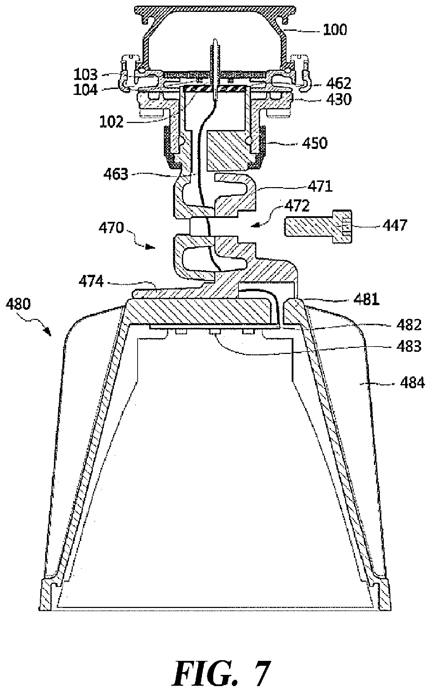

FIG. 6 is an exploded perspective view of an example lighting unit applied to at least one embodiment of the present disclosure, and FIG. 7 is a cross-sectional view of the lighting unit of FIG. 6 after assembly.

Referring to FIGs. 6 and 7, the lighting unit 400 according to the present disclosure includes a flange 430 provided with a first substrate 105 exposing a center electrode 102 and a spring electrode 104 through an opening 101 provided in the body 100. The flange 430 is coupled to the periphery of the opening 101 of the body 100 and allows a corresponding component to be rotatably coupled thereto. The lighting unit 400 includes a rotation part 440 connected to the flange 430 by a coupling 450 fastened to the flange 430, a second substrate 460 fixed to the rotation part 440 and provided with an electrode pin 461 adjacent to the center electrode 102 of the first substrate 105 and a ring-shaped electrode 462 adjacent to the spring electrode 104. The lighting unit 400 also includes a tilt unit 470 having a second tilt arm 471 fastened to a first tilt arm 441 provided in the rotation part 440 with the tilt angle thereof adjusted, and an LED optical module unit 480 coupled to the tilt unit 470.

The configuration and operation of the lighting unit 400 configured as described above will be described in more detail as follows.

The first substrate 103 is accommodated in a fixed state on the inner side of the aforementioned body 100.

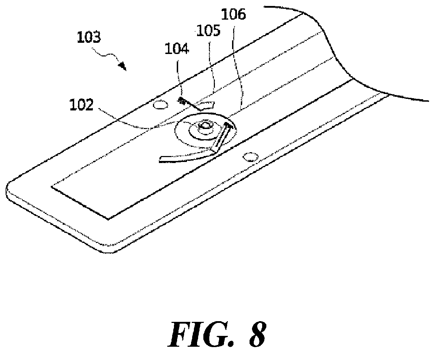

FIG. 8 is a perspective view of the first substrate 103 according to at least one embodiment of the present disclosure.

Referring to FIG. 8, the first substrate 103 is printed with wiring parts 105 and 106 to supply power from the power supply 110 mounted in the body 100. The center electrode 102 and the spring electrode 104 are electrically connected with the wiring parts 105 and 106 and fixed thereto, respectively.

The center electrode 102 protrudes from the wiring part 106 and prevents the electrode pin 461 from being detached by inserting the electrode pin 461 in a cylindrical shape. The spring electrode 104 provides an elastic force upwardly from the first substrate 103 and may remain in contact with the ring-shaped electrode 462.

The center electrode 102 and the spring electrode 104 are specified according to the number of the openings 101, and they serve to supply power to each of the optical module units 480, which will be described later.

A flange 430 is coupled to the opening 101 of the body 100. The flange 430 is appropriately formed with a threaded portion that is rotatably coupled to the outer side of the flange 430 and is firmly fixed on the opening 101 of the body 100 by bolts.

The rotation part 440 is coupled and fixed to the flange 430 by the coupling 450. The rotation part 440 is provided with a stepped portion 442 which receives an applied fastening force by being engaged with one end of the coupling 450. A fastening hole 443 is provided at one end of the rotation part 440 facing the flange 430 with respect to the stepped portion 442, and a first tilt arm 441 is provided at the opposite side of the fastening hole 443 to allow vertical rotation. The coupling 450 is provided with a threaded portion in the inner diameter portion thereof so as to be fastened to a threaded portion on the outer surface of the flange 430, and the diameters of both ends of the inner diameter portion of the coupling 450 are different from each other such that the coupling force is transmitted to the stepped portion 442 described above.

The rotation part 440 may rotate in a direction parallel to the surface of the body 100 where the opening 101 is formed in a state in which the coupling 450 is not fully engaged with the flange 430,. When the ring 450 is rotated to be firmly coupled to the flange 430, the stepped portion 442 is completely in close contact with the flange 430 and is fixed in a state in which rotation is impossible.

The second substrate 460 is fixed to the fastening hole 443 of the rotation part 440. The electrode pin 461 protrudes from the fastening hole 443 and the ring-shaped electrode 462 is printed in a ring shape on the surface of the second substrate 460 with the electrode pin 461 at the center thereof.

The first substrate 103 and the second substrate 460, which are provided between the body 100 and the rotation part 440, are collectively referred to as a power connection part. The spring electrode 104 of the first substrate 103 described above is brought into contact with the ring-shaped electrode 462 of the second substrate 460 and the electrode pin 461 is brought into contact with the center electrode 102.

The electrode pin 461 and the center electrode 102 of the power connection part are the center of rotation of the rotation part 440, and therefore when the rotation part 440 is rotated in parallel with the surface on which the opening 101 of the body 100 is formed, the positions of the electrode pin 461 and the center electrode 421 do not change. Accordingly, the flange 430 and rotation part 440 come in contact with each other when the flange 430 is coupled to rotation part 440 by the coupling 450. The one or more spring electrodes 104 are spaced by a specific distance from the electrode 102. The ring-shaped electrode 462 is also spaced apart from the electrode 102 with respect to the electrode pin 461 by a distance corresponding to the distance between the spring electrode 422 and the center electrode 421, and therefore the ring-shaped electrode 462 may contact the spring electrode 104 irrespective of the rotation position of the rotation part 440.

Therefore, even if the rotation part 440 is in free rotation, the power supplied to the first substrate 103 may be easily transferred to the second substrate 460.

The power supplied to the electrode pin 461 of the second substrate 460 and the ring-shaped electrode 462 is delivered to the optical module unit 480 through the electric wire 463.

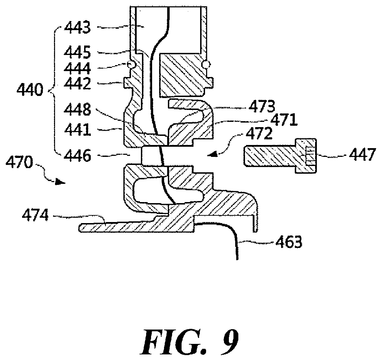

FIG. 9 is a detailed cross-sectional view of a configuration of the rotation part 440 and the tilt unit 470.

Referring to FIG. 9, the rotation part 440 is provided with a first wire connection hole 445 through which multiple electric wires 463 may extend from the fastening hole 443 to which the second substrate 460 is coupled and are connected to the second substrate 460 through the first tilt arm 441. In addition, an O-ring 444 is provided on the outer surface of the rotation part 440 to block moisture or water from entering from the outside.

The first tilt arm 441 is an empty space except for the first tilting center portion 448 to which the bolt 447 is coupled and thus may extend into the first tilt arm 441, and extend to the tilt unit 470 via the tilting center portion 448 of the first tilt arm 441.

The center of the first tilting center portion 448 is provided with a fastening hole 446 to which the bolt 447 is coupled and the fastening hole 446 is in communication with a fastening hole 472 provided at the center of the second tilting center portion 473 of the tilt unit 470. One can tilt the first tilting center portion 448 with respect to the first tilt arm 441 in the direction perpendicular to the rotation direction of the rotation part 440 of the second tilt arm 471 while the bolt 447 is not fully engaged.

The second tilt arm 471 of the tilt unit 470 is also formed as an empty space except for the second tilting center portion 473 where a fastening hole 472 is provided. The electric wire 463 extending from the first tilt arm 441 may extend further to the second tilt arm 471.

The lower portion of the second tilt arm 471 is provided with a seating portion 474 to which the optical module 480 is coupled, and is also provided with the second wire connection hole 475 extending from the second tilt arm 471 through the seating portion 474 such that the electric wires 463 may be connected to the optical module unit 480.

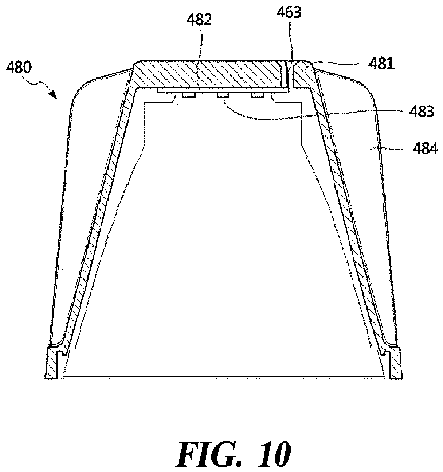

FIG. 10 is a cross-sectional view of a configuration of the optical module unit 480 according to at least one embodiment of the present disclosure.

Referring to FIG. 10, the optical module unit 480 includes a bell-shaped cover part 481, a third substrate 482 secured to the inside of the bell-shaped cover part 481 and connected with the electric wire 463, at least one LED 483 provided on the third substrate 482 to receive power of the power connection part through the electric wire 462 to emit light, and a plurality of heat dissipation fins 484 provided on the outer surface of the bell-shaped cover part 481.

The upper surface of the bell-shaped cover part 481 is provided with an opening to allow the electric wire 463 to be connected to the third substrate 482. The present disclosure is not limited to the specific shape of the optical module unit 480.

The optical module 480 can be rotated in parallel with the surface of the body 100 on which the opening 101 of the body 100 is formed by the rotation part 440, and is coupled to the rotation part 440 so as to be tilted in the vertical direction with respect to the surface on which the opening 101 of the body 100 is formed, such that a user may adjust the light distribution.

The body 100 may be fixed to a wall, a ceiling or a support.

At the end of the service life of the LED 483 provided in the optical module unit 480, or when a part of the LED 483 is damaged, or the optical module unit 480 needs to be replaced, the structure below the rotation part 440 may be separated from the flange 430 by uncoupling the coupling 450 for replacement.

In addition, when the first substrate 103 becomes faulty, the cover part 200 may be opened to replace the first substrate 103.

This is offered because the power connection part, which includes the first substrate 103 and the second substrate 460, is not connected to the electric wire, but supply of power is enabled by contact between the center electrode 102 and the electrode pin 461 and between the spring electrode 104 and the ring-shaped electrode 462.

With the configurations described above, each of the lighting units 400 may be rotated and tilted, and thus each lighting region may be adjusted.

The speaker unit 600 is coupled to the bottom surface of the rear portion of the body 100 of the lighting unit 400 configured as above.

The speaker unit 600 includes at least one speaker and a drive unit for driving the speaker. The speaker unit 600 is connected to the bottom surface of the body 100 to reproduce a voice signal received through the first antenna unit 130 or the second antenna unit 140

In addition, the camera unit 500 is also coupled to the bottom surface of the body 100 to photograph a designated area. The coupling structure at this time is the same as the coupling structure of the lighting unit 400, such that rotation and tilting of the camera unit 500 may be performed.

In this configuration, the image photographed by the camera unit 500 may be transmitted to the outside through the first antenna unit 130 by the communication controller 120. The first antenna unit 130 is for transmitting/receiving Wi-Fi signals, and transmits a video image captured by the camera unit 500 to a management server provided separately such that the video image is stored.

The second antenna unit 140 may be understood as an antenna for transmitting/receiving a control signal using a communication method such as ZigBee.

The plurality of camera-integrated LED lighting devices according to at least one embodiment of the present disclosure may be configured to control dimming of the lighting unit 400 according to a control signal of the management server. Alternatively, an illuminance sensor capable of detecting external illuminance may be added to a configured camera-integrated LED lighting device to detect illuminance, and may transmit a detection result to other nearby lighting devices to control dimming of the lighting devices.

In a modified arrangement, dimming control may be performed by adding an illuminance sensor to each of the lighting devices according to the present disclosure.

In FIGs. 1 to 5, the sign of the controller for dimming control or sound output control has been described for the sake of convenience. The dimming control based on the external control signal or illuminance detection result may be easily understood and practiced by those skilled in the art.

In addition, when the management server transmits a voice signal wirelessly, the voice signal may be received through the first antenna unit 130, and output through the speaker of the speaker unit 600 to perform announcement or warning broadcast.

Although exemplary embodiments of the present disclosure have been described for illustrative purposes, those skilled in the art will appreciate that various modifications, additions and substitutions are possible, without departing from the idea and scope of the claimed invention.

For example, although the foregoing description states that various signals are transmitted in a wireless manner, they may be transmitted and received by wire.

### [Industrial Applicability]

The present disclosure is applicable to LED lighting devices integrally manufactured with a camera, whereby preventing distortion of images captured by the camera due to light from the LED lighting devices.

## Claims

1. A camera-integrated LED lighting device comprising:
a body having an open upper surface and providing an accommodation space therein, the body having a bottom surface formed with a rear portion of the bottom surface arranged lower than a front portion of the bottom surface;
a power supply, a communication control unit, and an antenna unit accommodated in the body;
a plurality of lighting units coupled to the front portion of the bottom surface of the body;
a camera unit coupled to the rear portion of the bottom surface of the body;
a cover part open ably hinge-coupled to the upper surface of the body at one end thereof and having an antenna cover part formed with a part of the cover part protruding upward to accommodate the antenna unit in a protruded state; and
a speaker unit coupled to the bottom surface of the body.

2. The camera-integrated LED lighting device of claim 1, wherein the cover part is provided with a plurality of coupling grooves formed on an upper surface thereof,
the camera-integrated LED lighting device further comprising:
a shield cover part having a lower surface provided with a plurality of insertion protrusions inserted into the coupling grooves of the cover part to cover the cover part.

3. The camera-integrated LED lighting device of claim 2, wherein the shield cover part has a curved upper surface.

4. The camera-integrated LED lighting device of any one of claims 1 to 3, wherein the lighting unit and the camera unit are tilted and rotated by a rotation part coupled to the body and rotatable in a direction parallel to a coupling surface of the body; and a power connection part connecting a power between the body and the rotation part such that the power is supplied by contact between electrodes irrespective of a degree of rotation of the rotation part.

5. The camera-integrated LED lighting device of claim 4, wherein the power connection part comprises:
a first substrate embedded in the body and exposing a center electrode and a spring electrode spaced a predetermined distance from the center electrode through an opening formed in the body; and
a second substrate comprising an electrode pin provided to the rotation part and configured to contact the center electrode while the rotation part is coupled to the body, and an annular electrode spaced from the electrode pin by a distance between the center electrode and the spring electrode and contacting the spring electrode.

6. The camera-integrated LED lighting device of claim 5, further comprising:
a flange providing a threaded portion coupled to the body to allow a counterpart to be rotatably coupled; and
a coupling configured to couple the rotation part to the flange.

7. The camera-integrated LED lighting device of claim 6, further comprising:
a tilt unit coupled to the rotation part and tilted in a direction perpendicular to the coupling surface of the body; and
an optical module unit coupled to a bottom surface of the tilt unit to emit light.

8. The camera-integrated LED lighting device of claim 7, wherein the rotation part comprises:
a fastening hole coupled with the second substrate;
a first tilt arm communicating with the fastening hole to allow a wire to extend therethrough, the first tilt arm being coupled to the tilt unit; and
a stepped portion protruding from an upper-side outer surface of the tilt arm to receive a coupling force of the coupling.

9. The camera-integrated LED lighting device of claim 8, wherein the tilt unit comprises:
a second tilting arm coupled to the first tilt arm to be tilted according to a degree of fastening of the bolt, and having a space inside thereof, the wire extending through the space;
a seating portion provided to a lower portion of the second tilt arm and having a bottom surface, an upper portion of the optical module unit being coupled to the bottom surface; and
a second wire connection hole provided between the second tilt arm and the seating portion to allow the wire to be connected to the optical module unit.
